# EUROPÄISCHE PATENTANMELDUNG

(11) **EP 0 553 712 A1**
(43) Veröffentlichungstag der Anmeldung: **04.08.1993**
(21) Anmeldenummer: 93100869.2
(22) Anmeldetag: 21.01.1993
(51) Int. Cl.: A61C 1/00, A61B 17/36

(54) **Laser-Behandlungsgerät, insbes. für ärztliche oder zahnärztliche Zwecke**

(30) Priorität: 03.04.1992 DE 4211233; 29.01.1992 DE 9201056 U
(71) Anmelder: KALTENBACH & VOIGT GMBH & CO., D-88400 Biberach (DE)
(72) Erfinder: Logé, Hans, W-7950 Biberach 1 (DE); Mohn, Uwe, Dipl.-Ing., W-7933 Schelklingen (DE)
(74) Vertreter: Schmidt-Evers, Jürgen, Dipl.-Ing.

(57) **Zusammenfassung**

Bei einem zahnärztlichen Laser-Behandlungsgerät (101) mit einem Steuergerät (106) und einer mit dem Steuergerät durch eine lösbare Verbindung (131) verbundenen Versorgungseinrichtung (108;) für ein Laser-Behandungsinstrument (2;122), wobei wenigstens zwei vom Steuergerät (106) ausgehende, sich durch die lösbare Verbindung (131) und entlang der Versorgungeinrichtung (108) zum Laser-Behandlungsinstrument (122) erstreckende Mediumleitungen vorgesehen sind, und wobei das Laser-Behandlungsinstrument (122) ebenfalls durch eine lösbare Verbindung (164) mit der Versorgungseinrichtung (108) verbindbar ist, die lösbare Verbindung (131,) zwischen dem Steuergerät (106) und der Versorgungseinrichtung (108) und/oder zwischen der Versorgungseinrichtung (108) und dem Laser-Behandungsinstrument (122) durch eine selbsttätig elastisch ein- und ausrastende Steckkupplung (131,) mit einem zylindrischen Kupplungszapfen (132) und einer ihn aufnehmenden zylindrischen Kupplungsbuchse (137) gebildet ist, wobei die Mediumleitung für den Laserstrahl (124) sich koaxial durch die Steckkupplung (131,) erstreckt und die weitere Mediumleitung (48) die zylindrische Trennfuge zwischen dem Kupplungszapfen und der Kupplungsbuchse abgedichtet durchsetzt, und sich im Kupplungszapfen und in der Kupplungsbuchse fortsetzt und wobei nächst der Mündungsöffnung an der Trennfuge eine Ringnut in der Innenwandung der Kupplungsbuchse (137) oder vorzugsweise in der Außenwandung des Kupplungszapfens (132) vorgesehen ist.

## Beschreibung

Für ein ärztliches oder zahnärztliches Laser-Behandlungsgerät bestehen zwei wesentliche Forderungen. Zum einen ist eine große Laserstrahl-Leistung erwünscht, um die Behandlung effizient ausführen zu können, und zum anderen ist eine handhabungsfreundliche und leichte Führung des Behandlungsinstruments erwünscht. Letzteres ist insbesondere deshalb von Bedeutung, weil der Behandler während z.B. einer Zahnbehandlung mit Laserstrahl keinen Behandlungswiderstand verspürt, wie es bei mechanisch wirksamen Behandlungsinstrumenten der Fall ist, zum Beispiel einem Bohrer, der während des Bohrens mit einer gewissen Druckkraft gegen die zu bearbeitende Fläche gedrückt wird.

Es sind Laser-Behandlungsgeräte bekannt, die dazu eingerichtet sind, Behandlungsinstrumente zu versorgen, die die Laserstrahl-Erzeugungseinrichtung enthalten, so daß den Handstücken die für die Laserstrahl-Erzeugung erforderliche Energie vom dem Laser-Behandlungsgerät zugehörigen Steuergerät zuzuführen ist. Solche Laser-Behandlungsinstrumente sind von kompliziertem Aufbau sowie großer Bauweise und großem Gewicht. Außerdem muß jedem zugehörigen Laser-Behandlungsinstrument eine Laser-Strahlerzeugungseinrichtung zugeordnet werden, was zu hohen Herstellungskosten führt.

Es ist ein Laser-Behandlungsgerät vorgeschlagen worden, bei dem die Laserstrahl-Erzeugungseinrichtung in das Steuergerät integriert ist. Bei einer solchen Bauweise ist es erforderlich, den Laserstrahl vom Steuergerät zum Laser-Behandlungsinstrument zu führen. Hierzu kann ein flexibles Lichtleitkabel dienen. Für den Anschluß einer solchen Versorgungseinrichtung an das Steuergerät werden übliche Verschraubungen benutzt.

Es ist bereits vorgeschlagen worden, für die Drehbarkeit eines Laser-Behandlungsinstruments um seine Längsachse die Drehbarkeit des das Laser-Behandlungsinstrument tragende vordersten Gliedes eines Gelenkgliederarmes auszunutzen. Bei diesem Vorschlag ist das Laserhandstück mit dem vordersten Glied des Gelenkgliederarmes durch ein Anschlußstück verbunden, das zu beiden Seiten jeweils ein Anschlußgewinde aufweist und hierdurch sowohl mit dem Laserhandstück als auch mit dem Armglied verschraubbar ist. Außerdem ist bei diesem Vorschlag im Anschlußstück eine Linse für den Laserstrahl angeordnet. Eine Mediumleitung ist in einer das Anschlußstück überbrückenden Anordnung vorgesehen. Hierzu befindet sich im hinteren Endbereich des Laserhandstückes ein von dessen Außenmantelfläche abstehendes Anschlußröhrchen für einen kleinen Mediumschlauch, der das Anschlußstück überbrückt. Innerhalb des Laserhandstückes verläuft die Mediumleitung zu einer in der Nähe einer seitlichen Auslaßöffnung für den Laserstrahl angeordneten Düse.

Bei diesem vorschlagsmäßigen Laser-Behandlungsinstrument ist dessen Drehbarkeit beeinträchtigt, weil zum einen das Armglied mitbewegt wird und zum anderen die Drehbarkeit durch das Vorhandensein des Mediumschlauches begrenzt ist, der sich beim Drehen um das Anschlußstück wickelt. Bemißt man den Mediumschlauch sehr lang, dann wäre vielleicht eine Drehbarkeit um 360° erreichbar, jedoch wird dies zu einer Mediumschlauch-Schlaufe führen, die die Handhabung des Laser-Behandlungsinstruments beeinträchtigt.

Der Erfindung liegt die Aufgabe zugrunde, ein Laser-Behandlungsgerät der eingangs angegebenen Art so auszugestalten, daß bei Gewährleistung einer einfachen Bauweise und einer leistungsfähigen Medienführung ein handhabungsfreundlicher Anschluß des Laser-Behandlungsinstruments an der Versorgungseinrichtung und/oder der Versorgungseinrichtung am Steuergerät möglich ist.

Diese Aufgabe wird durch die Merkmale des Anspruchs 1 gelöst.

Beim erfindungsgemäßen Laser-Behandlungsgerät ist zwischen dem Steuergerät und der Versorgungseinrichtung und/oder zwischen der Versorgungseinrichtung und dem Behandlungsinstrument eine Steck/Dreh-Kupplung vorgesehen, die nicht nur eine leichte Drehbarkeit der Versorgungseinrichtung am Steuergerät und/oder eine leichte Drehbarkeit des Laser-Behandlungsinstruments an der Versorgungseinrichtung ermöglicht, sondern auch eine handhabungsfreundliche Schnellkupplung bzw. Steckverbindung bildet, so daß die Versorgungseinrichtung und/oder das Laser-Behandlungsinstrument leicht und schnell angekuppelt und wieder entkuppelt werden können, z.B. um die Versorgungseinrichtung und/oder das Laser-Behandlungsinstrument zu desinfizieren, zu warten oder mit einer anderen Funktionsart auszutauschen.

Dabei ist eine leichte Drehbarkeit gewährleistet, was aus Handhabungsgründen bei der Behandlung erwünscht ist. Die Medienleitungen sind durch die Steck/Dreh-Kupplung hindurchgeführt und sie werden beim Kuppeln und Entkuppeln automatisch verbunden oder getrennt.

Bei der erfindungsgemäßen Ausgestaltung entfällt ein Anschluß der Mediumleitung am Umfang des Laser-Behandlungsinstrumentes bzw. dessen Handstückes, da die Mediumleitung die Kupplungsstelle nicht überbrückt sondern hindurchgeführt ist. Bei einer solchen erfindungsgemäßen Ausgestaltung ist auch deshalb ein leichtes Drehen des Laser-Handstückes möglich, weil das Anschlußstück und der sich hinter der Steck/Dreh-Kupplung befindliche Mediumleitungsabschnitt nicht mitbewegt werden. Dies gilt auch für das vorderste Armglied eines Gelenkgliederarmes, wenn das erfindungsgemäße Laser-Behandlungsinstrument mit einem solchen Gelenkgliedearm verbunden sein sollte.

Im Rahmen der Erfindung ist es möglich, verschiedene Versorgungseinrichtungen vorzusehen, die sich handhabungsfreundlich und schnell an das Steuergerät und/oder mit dem Laser-Behandlungsinstrument verbinden lassen. Bei solchen Versorgungseinrichtungen kann es sich um einen Gelenkgliederarm handeln, durch den ein Laserstrahl mittels eines optischen Leitsystems hindurchführbar ist, oder es kann sich auch um flexible Versorgungsschläuche in Form von Lichtleitern handeln. Dabei ist die Verwendung solcher schlauchförmigen Lichtleiter möglich, bei denen der Laserstrahl durch einen Glasfaserleiter oder durch einen eine Flüssigkeit enthaltenden Leiterkanal hindurchgeführt wird, oder es kann auch ein solcher schlauchförmiger Lichtleiter verwendet werden, bei dem der Laserstrahl durch einen Leiterkanal hindurchgeführt, dessen Innenwandung verspiegelt ist.

In den Unteransprüchen sind Merkmale enthalten, die zur Problemlösung beitragen, eine präzise Laserstrahl-Führung, insbesondere im Bereich der Steck/Dreh-Kupplungen eine koaxiale Laserstrahl-Führung, gewährleisten, zu einer kleinen, einfachen, leichten und kostengünstig herstellbaren und zweckmäßigen Bauweise führen und außerdem die Montage bzw. Demontage sowie die Handhabung bei der Behandlung erleichtern bzw. verbessern.

Nachfolgend werden die Erfindung und weitere durch sie erzielbare Vorteile anhand bevorzugter Ausführungsbeispiele und der Zeichnungen näher erläutert.

Es zeigen
Fig .1 ein erfindungsgemäßes Laser-Behandlungsinstrument im Längsschnitt;
Fig. 2 und 3 ein Handstück und ein Anschlußstück des Laser-Behandlungsinstrumentes im Längsschnitt;
Fig. 4 die in Figur 1 mit X gekennzeichnete Einzelheit in entkuppelter Position in vergrößerter Darstellung;
Fig. 5 die in Figur 1 mit Y gekennzeichnete Einzelheit in vergrößerter Darstellung;
Fig. 6 ein erfindungsgemäßes dentales Laser-Behandlungsgerät in perspektivischer Vorderansicht;
Fig. 7 das Laser-Behandlungsgerät in vergrößerter Schnittdarstellung der Lagerung eines Gelenkgliederarms und einer Ausgleichseinrichtung für das Eigengewicht des Gelenkgliederarms;
Fig. 8 eine Drehlager/Steckkupplung-Kombination im vertikalen Schnitt;
Fig. 9 ein wesentliches Funktionsteil der Ausgleichseinrichtung im vertikalen Schnitt in IX-IX Fig. 3;
Fig. 10 eine der Figur 7 entsprechende Ansicht mit einer abgewandelten Gewichts-Ausgleichseinrichtung;
Fig. 11 das Laser-Behandlungsgerät mit einer weiter abgewandelten Gewichts-Ausgleichseinrichtung in der Seitenansicht;
Fig. 12 wesentliche Einzelteile der Gewichts-Ausgleichseinrichtung nach Figur 11 in vergrößerter Darstellung;
Fig. 13 ein erfindungsgemäße dentales Laser-Behandlungsgerät in abgewandelter Ausgestaltung und in perspektivischer Vorderansicht;
Fig. 14 einen dentalen Behandlungsplatz mit einem Behandlungsstuhl, dem das erfindungsgemäße Laser-Behandlungsgerät zugeordnet ist, in perspektivischer Darstellung;
Die Hauptteile des Laser-Behandlungsinstrumentes 1 sind ein durch eine Griffhülse gebildetes Handstück 2 mit einem Austritt 3 für einen Laserstrahl an seinem vorderen Ende, ein Anschlußstück 4 durch das das Handstück 2 mit dem vordersten Armglied 5 eines im weiteren nicht dargestellten Gliedergelenkarmes verbunden bzw. verbindbar ist, eine Steck/Dreh-Kupplung 6 zur lösbaren Verbindung des Handstückes 2 mit dem Anschlußstück 4, Einrichtungen zur Leitung des Laserstrahles axial durch das Anschlußstück 4 und das Handstück 2 zu dessen Austritt 3 und wenigstens eine, vorzugsweise zwei Medienleitungen 7,8, hier für Wasser und Druckluft, die an das Anschlußstück 4 angeschlossen sind und durch das Anschlußstück 4, die Steck/Dreh Kupplung 6 und das Handstück 2 zu einer vorzugsweise gemeinsamen Mediendüse 9 verlaufen, die in einem kleinen Abstand hinter dem Laserstrahl-Austritt 3 angeordnet ist.

Das Handstück 2 ist bei der vorliegenden Ausgestaltung mit einem hinteren Hülsenteil 11 und einem vorderen Hülsenteil bzw. Kopfteil 12 zweiteilig ausgebildet und an der Trennstelle 13 zusammengesteckt. Dabei ist das Kopfteil 12 mit einem Zapfen in das Hülsenteil 11 fest eingesteckt, so daß es für die übliche Handhabung nicht lösbar ist. Die Trennstelle 13 ist vorzugsweise aus Gründen einer einfachen Fertigung und Montage vorgesehen. Am hinteren Ende des Handstückes 2 ist das Hülsenteil 11 durch ein im Querschnitt etwas größer bemessenes Hülsenendstück 14 verlängert, das eine Außenschulter am hinteren Hülsenrand übergreift, und in dem eine Lagerhülse 15 fest eingesetzt ist, deren vorderes Ende in den hinteren Endbereich des Hülsenteils 11 hineinragt. Die zylindrische Innenwandung der Lagerhülse 15 bildet ein Steckloch 17, in das ein koaxialer, hohlzylindrischer Steckzapfen 18 des Anschlußstückes 4 mit geringem Bewegungsspiel einsteckbar ist und in der eingesteckten Position elastisch verrastbar ist. Hierzu dient ein radial wirksamer, gespaltener Federring 19, der in einer im hinteren Bereich des Steckzapfens 18 angeordneten Umfangsnut 21 mit Bewegungsspiel sitzt und dabei so groß bemessen ist, daß sein Außenmantel die Außenmantelfläche 22 des Steckzapfens 18 geringfügig überragt. Beim Einstecken des Steckzapfens 18 in das Steckloch 17 wird der Federring 19 zusammengedrückt. In der Steckendstellung rastet er elastisch in eine entsprechende Innenumfangsnut 23 im hinteren Bereich der Lagerhülse 15 elastisch ein. Beim Lösen der so gebildeten Steck/Dreh-Kupplung 6 durch eine leichte, axiale Kraftausübung wird der Federring 19 überdrückt, was durch Anlaufschrägen am Federring 19 und/oder an der Innenwandung 16 ermöglicht bzw. erleichtert wird.

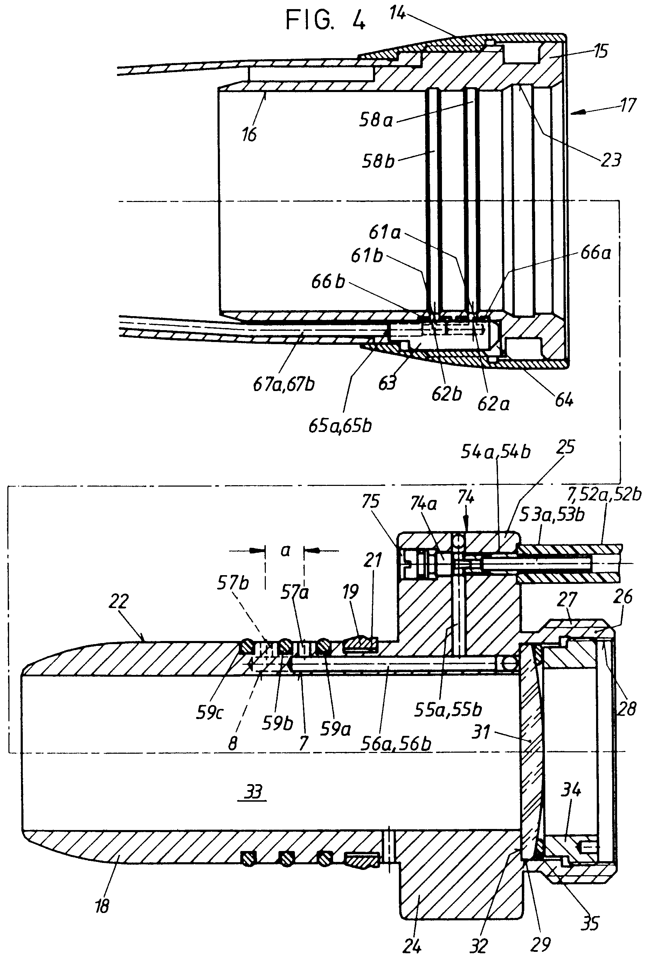

Der Steckzapfen 18 ragt koaxial von einem Flansch 24 nach vorne, der einen radialen Ansatz 25 aufweist. Rückseitig ragt vom Flansch 24 ein koaxialer Lagerring 26 nach hinten, der an seiner Außenmantelfläche ein Außengewinde 27 und im Bereich der hinteren Hälfte seiner Innenmantelfläche ein Innengewinde 28 aufweist. Die vordere Hälfte der Innenmantelfläche bildet ein zylindrisches Paßloch 29, in das passend eine optische Linse 31 eingesetzt ist, was am besten aus Figur 4 (Einzelheit X) ersichtlich ist. Zur axialen Lagerung der Linse 31 dient eine vorzugsweise ebene Schulter 32 zwischen dem Paßloch 29 und dem im Querschnitt etwas kleiner bemessenen zylindrischen Durchgangsloch 33 im Anschlußstück 4, das sich durch den Flansch 24 und den Steckzapfen 18 erstreckt. Zur Befestigung der Linse 31 dient eine mit Außengewinde und mit rückseitigen, nicht dargestellten Drehangriffselementen, z.B. kleinen einander diametral gegenüberliegenden Löchern versehene Ringmutter 34, mit der die Linse 31 mittels eines dazwischen angeordneten Rings 35 aus elastischem Material, wie z.B. Gummi gegen die Schulter 32 gedrückt ist.

Das Anschlußstück 4 ist mit seinem Außengewinde 27 in ein Gewindeloch 36 des hülsenförmigen Armglieds 5 eingeschraubt, das um seine Längsachse 37, die mit der Längsachse 37a des Handstückes 2 zusammenfällt, drehbar an einem hinteren, sich quer, vorzugsweise rechtwinklig, zum vordersten Armglied 5 erstreckenden, ebenfalls hülsenförmigen Armglied 38 gelagert ist. Bei der vorliegenden Ausgestaltung weist der insgesamt nicht dargestellte Gliedergelenkarm mehrere Armglieder in einer solchen Anzahl und Anordnung auf, daß die zur Behandlung erforderliche Beweglichkeit des Laser-Behandlungsinstrumentes gewährleistet ist. Der Laserstrahl wird in einer nichtdargestellten Laserstrahlerzeugungseinrichtung erzeugt, an der das hintere Ende des Gliedergelenkarmes gehalten ist. Dabei wird der Laserstrahl durch die hülsenförmigen Armglieder geleitet. In den zwischen den Armgliedern vorhandenen Armgelenken, hier Drehgelenk 39 zwischen den Armgliedern 5 und 38 wird der Laserstrahl mittels einer z.B. durch einen Spiegel oder ein Prisma 41 gebildeten Umlenkeinrichtung umgelenkt, so daß er koaxial aus dem Armglied 5 austritt und sich in Längsachsrichtung 37a durch die Linse 31, das Durchgangsloch 33 des Anschlußstückes 4 und das Handstück 2 erstreckt. Der Hohlraum des hülsenförmigen Handstückes 2 bzw. ein im Kopfteil 12 axialer zylindrischer Kanal 42 endet in axialer Richtung am vorderen Ende des Kopfteiles 12 und erstreckt sich dann vorzugsweise rechtwinklig nach außen. Im Bereich dieser Abknickung ist eine Laserstrahl-Umlenkeinrichtung, vorzugsweise ein Spiegel oder ein Prisma 43, positioniert, das den vorzugsweise durch die Linse 31 im Prisma 43 fokussierten Laserstrahl so bricht, daß er den Austritt 3 durchquert und fokussiert auf die mit A angedeutete Behandlungsstelle trifft, die sich im Bereich des Schnittpunktes der Achsen des Austritts 3 und der Mediendüse 9 befindet.

Es ist vorteilhaft, die Umlenkeinrichtung justierbar anzuordnen, um Toleranzunterschiede des Laser-Behandlungsinstrumentes 1 ausgleichen zu können.

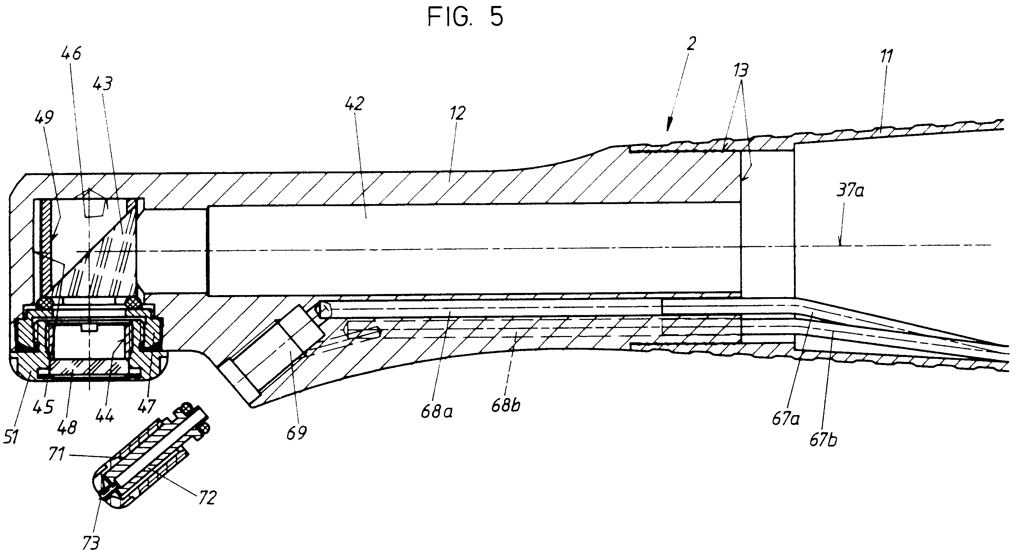

Vorzugsweise ist das Prisma 43 gemäß der die Einzelheit Y zeigenden Figur 5 in einem Einsatzstück 49 angeordnet bzw. gelagert, das im Sinne einer Patrone in den den Austritt 3 bildenden Querkanal 45 oder in den Endbereich des Kanals 42 einsetzbar ist. Wie Figur 5 deutlich zeigt, ist das Paß- oder Einsatzstück 49 gegen eine vorzugsweise ebene Paßfläche 46 gedrückt oder gespannt, die sich vorzugsweise parallel zur Längsachse 37a erstreckt und den Grund des Querkanals 45 bildet. Zur Halterung des Einsatzstückes 49 dient eine Ringmutter 47, die im Querkanal 45 eingeschraubt ist und vorzugsweise mittels eines elastischen Ringes gegen das Einsatzstück 49 drückt. Um die durch einen Spiegel oder das Prisma 43 gebildete Umlenkeinrichtung vor Teilchen zu schützen, die bei der Bearbeitung eines Zahnes mit dem Laserstrahl abplatzen, ist ihr eine laserstrahltransparente Schutzscheibe 48 nachgeordnet, die austauschbar im Bereich des Austritts 3 gehalten und somit von Zeit zu Zeit durch eine neue ersetzbar ist, wenn sie z.B. blind geworden ist. Die Schutzscheibe 48 kann aus Glas oder auch Kunststoff bestehen. Sie ist vorzugsweise in einem Haltering 44 mit Außengewinde befestigt, der in dem Querkanal 45 oder in die Ringmutter 47 einschraubbar ist, wozu entsprechende Gewinde vorzusehen sind. Vorzugsweise weist der Haltering 44 einen vorderseitigen Flansch 51 auf, in dem vorzugsweise durch Außennuten gebildete Drehangriffselemente zum Ein- und Ausschrauben vorgesehen sind. Die Einschraubtiefe der Ringmutter 47 oder des Halteringes 44 ist vorzugsweise durch eine Anschlagschulter begrenzt, so daß das Einsatzstück 49 durch die Andruckkraft nicht überbelastet werden kann, sondern maximal durch die Elastizität des vorbeschriebenen elastischen Ringes in seine Paßstellung vorgespannt ist.

Für die Medienzuführung sind zwei Medienschläuche 52a, 52b vorgesehen, die sich längs des Gliedergelenkarmes erstrecken und z.B. außen an diesem gehalten sind. Die Medienschläuche 52a, 52b und weitere Abschnitte der allgemein mit 7 bezeichneten Medienleitungen hier zwei Medienleitungen, liegen in der Zeichnungsansicht hintereinander, so daß jeweils nur eine Medienleitung 7 sichtbar ist. Die Medienschläuche 52a, 52b sind jeweils mittels eines rückseitig abstehenden Anschlußröhrchens 53a, 53b an das Anschlußstück 4 angeschlossen, das in ein achsparalleles Loch 54a, 54b im Ansatz 25 fest eingesetzt ist. Vom Loch verläuft ein Kanal 55a, 55b radial einwärts bis zu einem axialen Kanal 56a, 56b, der sich nach vorne bis in den Bereich vor dem Federring 19 erstreckt und mit einem radial nach außen verlaufenden Kanalabschnitt 57a, 57b an der Außenmantelfläche 22 des Steckzapfens 18 ausmündet. Dabei sind die beiden in Umfangsrichtung versetzten Kanalabschnitte 57a, 57b der beiden Medienleitungen 7 in einem axialen Abstand a voneinander angeordnet. Jedem Kanalabschnitt 57a, 57b bzw. seiner Mündungsöffnung ist in der Innenwandung 16 der Lagerhülse 15 eine Umfangsnut 58a, 58b gegenüberliegend zugeordnet. Zur axialen Abdichtung der Kanalabschnitte 57a, 57b bzw Umfangsnuten 58a, 58b sind drei Dichtungsringe 59a, 59b, 59c vorgesehen, von denen sich jeweils zwei axial vor und hinter dem zugehörigen Kanalabschnitt 57a, 57b bzw. der zugehörigen Umfangsnut 58a, 58b befinden. Die vorzugsweise durch O-Ringe gebildeten Dichtungsringe befinden sich jeweils in einer Umfangsnut, die vorzugsweise in der Außenmantelfläche 22 des Steckzapfens 18 angeordnet ist. Von den Umfangsnuten 58a, 58b führt jeweils ein radialer Kanalabschnitt 61a, 61b ab, der jeweils mit einem zugehörigen radialen Abschnitt 62a, 62b in einem Einsatzstück 63 korrespondiert, das in einer zugehörigen Ausnehmung 64 bzw. in einem zugehörigen Loch in der Lagerhülse 15 sitzt. Jeder radiale Kanalabschnitt 62a,62b steht mit einem axialen Kanalabschnitt 65a, 65b im Einsatzstück 63 in Verbindung, der an dessen Frontseite ausmündet. Die axialen Kanalabschnitte 65a, 65b sind ebenfalls in Umfangsrichtung versetzt angeordnet. Die Trennfugen zwischen den zueinander gehörigen radialen Kanalabschnitten 61a, 61b und 62a, 62b sind jeweils durch einen Dichtungsring 66a, 66b abgedichtet, der in einer Nut in der vorzugsweise ebenen Grundfläche der Ausnehmung 64 oder in der ihr zugewandten Innenfläche des Einsatzstückes 63 angeordnet ist.

In die vorderseitige Mündungsöffnung jedes axialen Kanalabschnittes 65a, 65b ist ein Röhrchen 67a, 67b fest und dicht eingesetzt. Die Röhrchen führen das zugehörige Medium (Druckluft, Wasser) zur Mediendüse 9.

Bei der vorliegenden Ausgestaltung sind die vorderen Enden der Röhrchen 67a, 67b fest und dicht in die hinteren Öffnungen von axialen Kanälen 68a, 68b fest und dicht eingesetzt, die sich zu einer die Mediendüse 9 aufnehmenden Düsenbohrung 69 erstrecken, deren Mittelachse schräg, vorzugsweise unter einem Winkel von 45° zur Längsachse 37a angeordnet ist. Die Mediendüse 9 weist ein hülsenförmiges Düsenaußenteil 71 und ein hülsenförmiges, im letzten aufgenommenen Düseninnenteil 72 auf, die als Baueinheit mit einem am Düsenaußenteil 71 angeordneten Außengewinde in die Düsenbohrung 69 einschraubbar sind. Das Wasser wird koaxial zum mittels eines Dichtungsringes abgedichteten Düseninnenteil 72 zugeführt, dessen Hülsenspitze in einem geringen Abstand vor der gemeinsamen Düsenöffnung 73 des Düsenaußenteiles 71 endet. Die Druckluft wird durch einen zwischen dem Düsenaußenteil 71 und dem Düseninnenteil 72 verlaufenden axialen Kanal zur Düsenöffnung 73 zugeführt. Im vor der der Düsenöffnung 73 vorhandenen Freiraum bzw Spalt erfolgt eine selbsttätige Vermischung der Druckluft und des Wasser zu einem aus der Düsenöffnung 73 austretenden Gemisch bzw. Spray.

Der vorbeschriebenen abgedichtete Verlauf der Medienleitungen 7 quer durch die Trennfuge zwischen dem einen Kupplungszapfen bildenden Steckzapfen 18 und dem eine Kupplungsbuchse bildenden Steckloch 17 ermöglicht ein Drehen des Handstückes 2 in der Steck/Dreh-Kupplung 6 um 360° und mehr, ohne daß eine Beeinträchtigung zu fürchten ist. Die vorbeschriebene Steck/Dreh-Kupplung 6 ermöglicht auch einen großen Querschnitt des Durchgangsloches 33, was der Laserstrahldurchführung und -leitung zugute kommt.

Einer oder beiden Medienleitungen 7, vorzugsweise der Wasser führenden Medienleitung, ist ein einstellbares Drosselventil 74 zugeordnet, mit dem die Strömungsmenge und/oder der Druck einstellbar ist, mit dem das zugehörige Medium an der Mediendüsen 9 austritt. Bei der vorliegenden Ausgestaltung ist das Drosselventil 74 im Ansatz 25 angeordnet. In diesem Bereich ist es von außen mit einem Verstellwerkzeug leicht zugänglich. Das Drosselventil 74 kann in einem axialen oder radialen Kanal angeordnet sein, der in den zugehörigen Kanalabschnitt der Medienleitung 7 mündet, so daß er vorzugsweise ein- und ausschraubbare Ventilkörper den zugehörigen Medienkanalquerschnitt verändern kann. Vorzugsweise weist das Drosselventil 74 eine durch einen Dichtungsring an ihrem Umfang abgedichtete und in eine radiale oder axiale Bohrung 75 eingeschraubte Schraube 74a auf, deren freies Ende vorzugsweise angespitzt ist und deren Kopfende ein Werkzeugangriffselement zum Drehen aufweist. Vorzugsweise ist die Bohrung 75 parallel zur Längsachse 37a und außerhalb des Umfangs des Handstücks 2 angeordnet und eine nach vorne durchgehende Verlängerung des Waser-Kanals 54a, so daß die Schraube 74a von vorne zugänglich ist.

Die Schraubenspitze kann mit dem Kanal im zugehörigen Röhrchen 53a zusammenwirken.

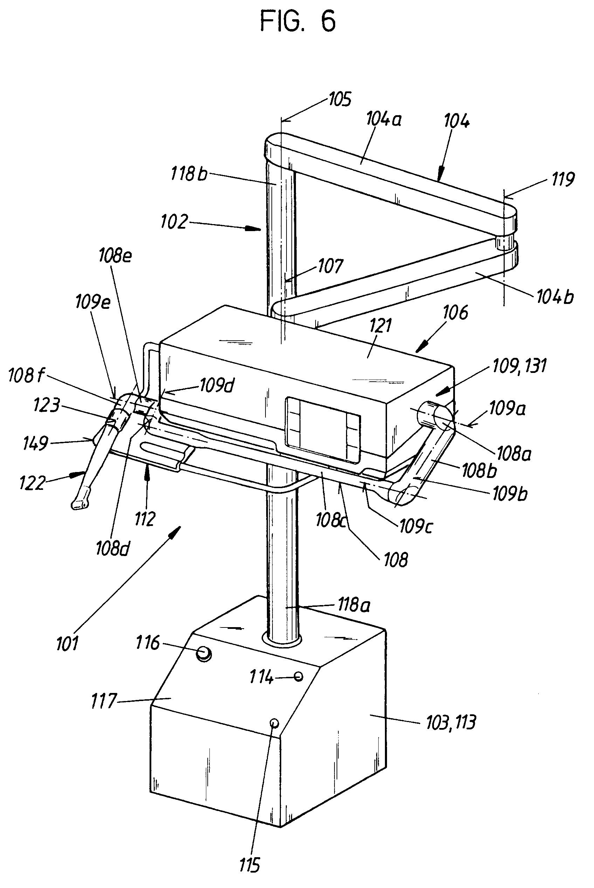

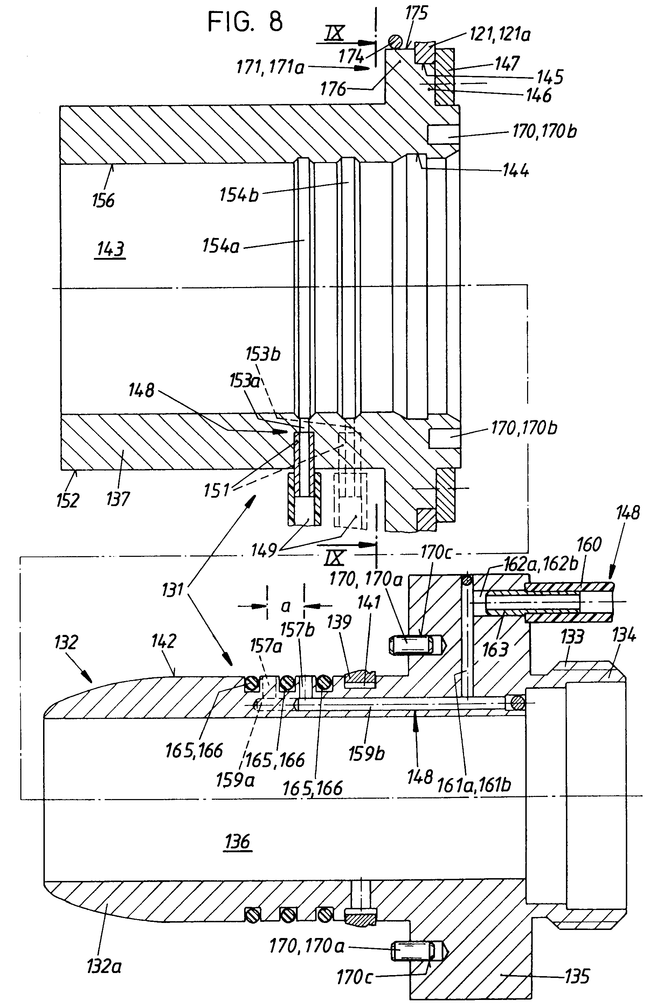

Das in Figur 6 dargestellte Laser-Behandlungsgerät 101 besteht aus einem Ständer 102 mit einem Ständerfuß 103, einem etwa horizontalen Tragarm 104, der um eine vertikale Drehachse 105 am Ständer 102 frei drehbar gelagert ist, ein Steuergerät 106, das am freien Ende des Tragarms 104 um eine vertikale Schwenkachse 107 frei schwenkbar gelagert ist, einem Gelenkgliederarm 108, der um eine horizontale Drehachse 109a frei drehbar in einem Drehlager 109 des Steuergerätes 106 frei drehbar gelagert ist und einem am Steuergerät 106 gehaltenen Tragteil 112 zur Halterung des freien Endbereichs des Gelenkgliederarms 108 in dessen Nichtgebrauchsstellung.

Bei der vorliegenden Ausgestaltung ist der Ständerfuß 103 durch einen würfel- bzw. quaderförmigen Kasten 113 gebildet, an dessen Frontseite und/oder vorderen Oberseitenbereich elektrische Steuerelemente angeordnet sind. Hierbei kann es sich um einen vorzugsweise durch ein Schloß abschließbaren Hauptschalter 114, ein Ein/Aus-Schalter 115 und einen Sicherheits-Ausschalter 116 handeln, wobei die beiden letzteren vorzugsweise Tastenschalter sind. Es ist vorteilhaft, die Steuerelemente an einer im oberen vorderen Eckenbereich des Kastens 113 vorhandenen, nach hinten schräg aufwärts verlaufenden Schrägfläche 117 anzuordnen. In einer solchen Anordnung können die Steuerelemente 115 und 116 mit dem Fuß des Behandlers leicht und sicher bedient werden. Vorzugsweise ist in dem ein Basisteil bildenden Ständerfuß 103 ein Großteil der vorhandenen Steuereinrichtung angeordnet. Hierbei kann es sich um einen Wasser-Vorratsbehälter, einer Pumpe für die Wasserversorgung, ein Lasernetzteil und einen Mikroprozessor handeln.

Der Ständer 102 besteht vorzugsweise aus einer im oder am Kasten 113 befestigten, vorzugsweise teleskopierbaren Tragsäule 118, bestehend aus einem unteren Säulenteil 118a, in dem ein oberes Säulenteil 118b vertikal verschiebbar und in der jeweiligen Schiebestellung feststellbar geführt ist. Der Tragarm 104 ist vorzugsweise ein sogenannter Knie-Hebelarm mit zwei Armteilen 104a,104b, die an ihren einander zugwandten Enden in einem Knie-Hebelgelenk um eine vertikale Schwenkachse 119 schwenkbar miteinander verbunden sind.

Das Drehlager 109 befindet sich an einer Seite des quaderförmigen Gehäuses 121 des Steuergerätes 106, so daß sich die Drehachse 109a parallel zur Vorderseite des Laser-Behandlungsgeräts 101 erstreckt. Bei Rechtsausführung (für Rechtshänder) ist das Drehlager 109 rechts angeordnet, und das Tragteil 112 befindet sich im linken Endbereich des Steuergeräts 106. Als Tragteil 112 kann ein plattenförmiges Ablageteil dienen, das vorzugsweise im vorderen Eckenbereich der Gehäuseecke angeordnet ist, die dem Drehlager 109 abgewandt ist.

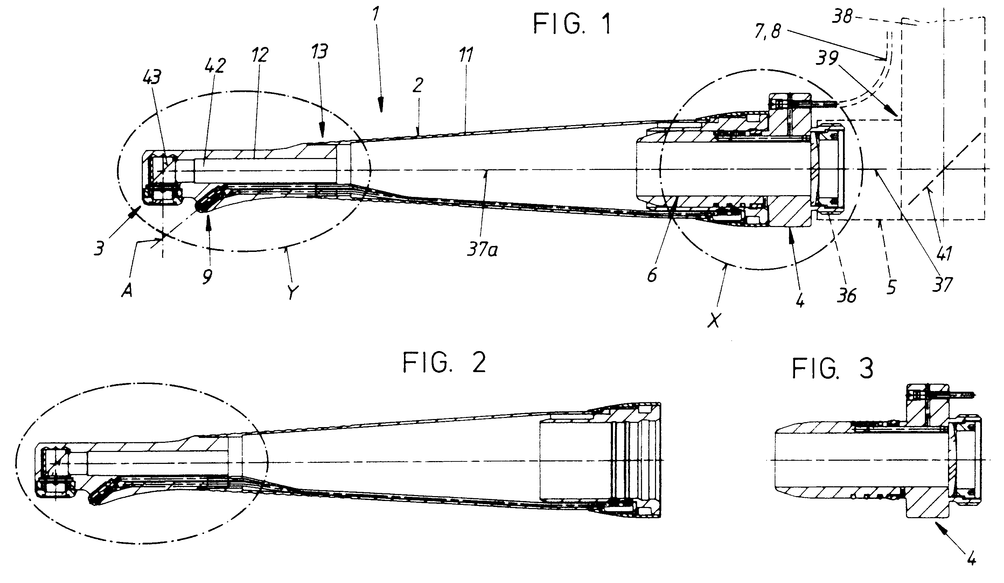

Der Gelenkgliederarm 108 besteht aus wenigstens drei Armgliedern, die um senkrecht zueinander verlaufende Dreh- oder Schwenkachsen drehbar bzw. schwenkbar gelagert sind. Bei der vorliegenden Ausgestaltung besteht der Gelenkgliederarm 108 aus sechs Armgliedern, von denen das erste Armglied 108a, das armseitige Lagerteil des Drehlagers 109 bildet. Die weiteren Armglieder 108b, 108c, 108d, 108e und 108f sind jeweils um eine zur vorherigen Drehachse rechtwinklig verlaufende Drehachse 109b, 109c, 109d, 109e, 109f am freien Ende des jeweils vorherigen Armgliedes frei drehbar gelagert. Am freien Ende des vordersten Armgliedes 108f ist ein mechanischer Anschluß, insbesondere eine Verschraubung mit vorzugsweise Innengewinde angeordnet, mittels der ein Laser-Behandlungsinstrument 122 am Gelenkgliederarm 108 lösbar befestigbar ist das dem nach Fig. 1 bis 5 entsprechen kann. Die Längsmittelachse 123 des Laser-Behandlungsintruments 122 erstreckt sich senkrecht zur Drehachse 109. Hierdurch erhält es eine vorteilhafte Anordnung für die Benutzung im Mundraum eines Patienten.

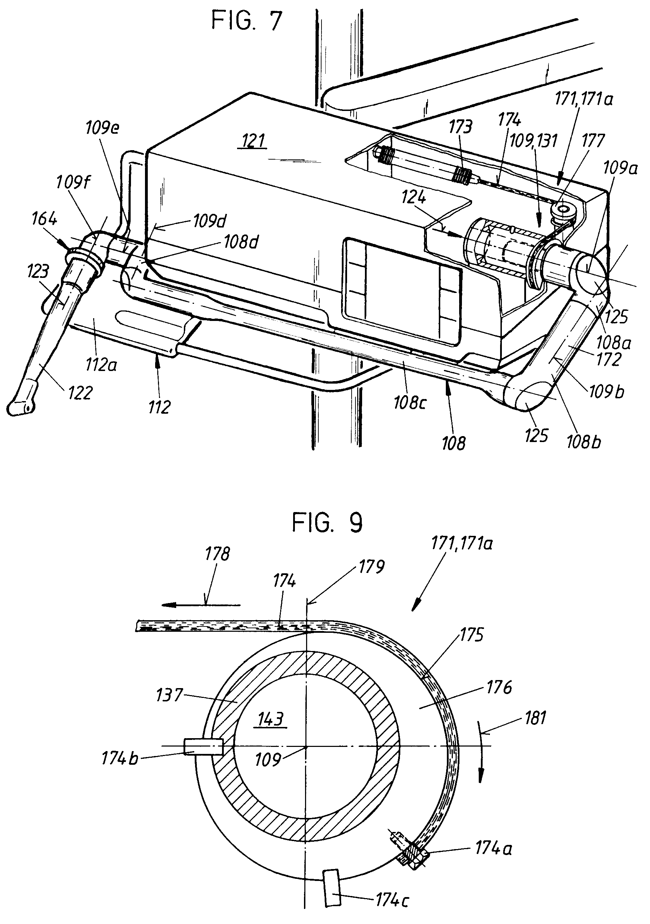

Im Steuergerät 106 befindet sich eine im einzelnen nicht dargestellte Laserstrahl-Erzeugungseinrichtung, die den in Figur 7 mit einem Pfeil 124 verdeutlichten Laserstrahl koaxial durch das Drehlager 109 hindurch, d.h. koaxial zur Drehachse 109a, in den Gelenkgliederarm 108 einstrahlt. Das Drehlager 109 ist hierzu hohl ausgebildet. Auch die Armglieder 108a bis 108f sind zur Durchführung des Laserstrahls 124 hohl ausgebildet, wobei in den Durchgangskanal des hohlen Gelenkgliederarms 108 ein Lichtleitsystem integriert ist, mit dem der Laserstrahl 124 zum freien Ende des Gelenkgliederarms 108 geleitet und koaxial in das Laser-Behandlungsinstrument 122 eingeführt werden kann. Das optische Leitsystem weist in den zwischen den Armgliedern 108a bis 108f vorhandenen Gelenken andeutungsweise dargestellte Spiegel 125 oder Prismen auf, die eine Umlenkung bzw. Brechung des Laserstrahls 124 um jeweils 90° in Längsrichtung des Gelenkgliederarms 108 bewirken. Der Spiegel 125 oder das Prisma ist jeweils am vorherigen Armglied befestigt, wobei er den Laserstrahl 124 in Längsrichtung des nachfolgenden Armglieds bricht.

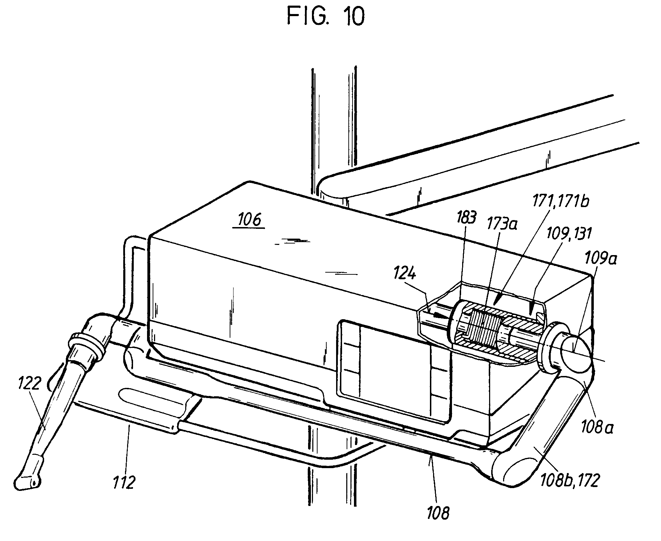

Der Gelenkgliederarm 108 ist durch eine als Schnellkupplung ausgebildete Steckkupplung 131 mit dem Steuergerät 106 lösbar verbunden. Die Steckkupplung 131 umfaßt einen zylindrischen Kupplungszapfen und eine ihn mit geringem Bewegungsspiel aufnehmende zylindrische Kupplungsbuchse. Beim vorliegenden Ausführungsbeispiel ist der Kupplungszapfen 132 am hintersten Armglied 108f einteilig oder als Anbauteil daran (Fig. 8) vorgesehen, wobei bei nicht einteiliger Ausführung der Kupplungszapfen 132 mit dem letzten Armglied 108f verschraubbar sein kann, wozu ein Außengewinde 133 auf einem koaxialen Hülsenvorsprung 134 dienen kann, mit dem der Kupplungszapfen 132 in ein Innengewinde (nicht dargestellt) des Armglieds 108f schraubbar ist. Der Zapfenabschnitt 132a des Kupplungszapfens 132 erstreckt sich koaxial von einem Flansch 135 nach hinten, von dessen anderen Seite sich der Hülsenvorsprung 134 nach vorne erstreckt. Der Kupplungszapfen 132 ist von einem zylindrischen Durchgangsloch 136 durchsetzt, so daß der Zapfenabschnitt 132a hülsenförmig ist. Der vordere Außenrand des Kupplungszapfens 132 ist gerundet, um sein Einstecken in die Kupplungsbuchse 137 zu erleichtern. Die Steckupplung 131 ist in der Schließstellung ihrer Kupplungsteile elastisch verrastbar und durch Überdrücken der Verrastung bei axialer Bewegung des beweglichen Kupplungsteils lösbar. Hierzu dient ein radial wirksamer, gespaltener Federring 139, der in einer im hinteren Bereich des Zapfenabschnitts 132a des Steckzapfens 132 angeordneten Umfangsnut 141 mit Bewegungsspiel sitzt und dabei so groß bemessen ist, daß seine Außenmantelfläche die Außenmantelfläche 142 des Steckzapfens 132 überragt. Beim Einstecken des Steckzapfens 132 in das Steckloch 143 der Kupplungsbuchse 137 wird der Federring 139 zusammengedrückt. In der Steckendstellung rastet er in eine entsprechend geformte Innenumfangsnut 144 im vorderen Bereich der Kupplungsbuchse 137 elastisch ein. Beim Lösen der so gebildeten Steck-/Dreh-Kupplung 131 durch eine verhältnismäßig leichte, axiale Kraftausübung wird der Federring 139 überdrückt, was durch Anlaufschrägen am Federring 139 und/oder an der Innenwandung des Stecklochs 143 ermöglicht, bzw. erleichtert wird.

Die Kupplungsbuchse 137 bildet das dem Gelenkgliederarm 108 zugeordnete Drehlagerteil des Drehlagers 109. Das dem Steuergerät 106 zugeordnete Drehlagerteil kann zum Beispiel an der seitlichen Gehäusewand 121a des Gehäuses 121 gelagert sein. Bei der vorliegenden Ausgestaltung ist in der seitlichen Gehäusewand 121a ein rundes Loch 145 vorgesehen, in das mit geringem Bewegungsspiel ein von der Kupplungsbuchse 137 koaxial vorragender zylindrischer Ringansatz 146 mit geringem Bewegungsspiel einfaßt. Zur axialen Sicherung der Kupplungsbuchse 137 im Loch 145 dient eine Lagerscheibe 147, die an der ebenen Stirnfläche des Ringansatzes 146 anliegt, sowie damit z.B. durch Schrauben befestigt ist und den außenseitigen Lochrand des Loches 145 überragt. Die Kupplungsbuchse 137 ist somit im Loch 145 sicher gelagert und dabei frei drehbar.

Zur Versorgung des Laser-Behandlungsintruments 122 sind zusätzlich zum Laserstrahl-Leitsystem weitere Medienleitungen zur Zuführung von Medien vorgesehen, die sich durch das Drehlager 109 und die Steckkupplung 131 sowie entlang des Gelenkgliederarms 108 erstrecken und in dessen vorderen Endbereich an das Laser-Behandlungsinstrument 122 angeschlossen werden können. Bei solchen weiteren Medien kann es sich um Wasser, Luft, Wasser-Luftgemisch, elektrischer Strom und/oder einen sogenannten Pilotstrahl handeln. Im folgenden werden beispielhaft zwei Medienzuführungen insbesondere für Luft und Wasser oder Wasser-Luftgemisch in jeweils einer von zwei Medienleitungen 148 beschrieben. Im Gegensatz zum Laserstrahl, für den es bei seiner Führung entlang des Gelenkgliederarms 108 und durch das Drehlager 109 und die Steckkupplung 131 keiner Abdichtung bedarf und der vorzugsweise koaxial zum Drehlager 109 angeordnet ist, bedarf es bei Medienleitungen für Behandlungs-Luft und/oder-Flüssigkeit, wie insbesondere Wasser oder Spray, einer abgedichteten Zuführung, insbesondere im Bereich der Steckkupplung 131 und der lösbaren Verbindung zwischen dem vordersten Armglied 108f und dem Behandlungsinstrument 122, die vorzugsweise ebenfalls durch eine Schnell- oder Steckkupplung gebildet ist. Diese Medienleitungen 148 erstrecken sich von der im Ständerfuß 103 angeordneten Pumpe oder von einer im Steuergerät 106 angeordneten Pumpe zur Kupplungsbuchse 137, wobei es sich um flexible Medienschläuche 149 handeln kann, die mit Leitungsanschlüssen 151 an der Kupplungsbuchse 137 zum Beispiel durch Aufstecken verbindbar sind. Bei der vorliegenden Ausgestaltung befinden sich die Leitungsansschlüsse 151 an der Außenmantelfläche 152 der Kupplungsbuchse 137, und es führt jeweils ein Medienkanal 153a, 153b radial einwärts zu einer zugehörigen Ringnut 154a, 154b in der Innenmantelfläche 156 der Kupplungsbuchse 137, die einen axialen Abstand a voneinander aufweisen. Im Kupplungszapfen 132 ist jeweils ein kurzer radialer Kanalabschnitt 157a, 157b vorgesehen, der die Außenmantelfläche 142 des Kupplungsabschnitts 132a in der Radialebene der zugehörigen Ringnut 154a, 154b durchsetzt und somit damit in Verbindung steht. Von den Kanalabschnitten 157a, 157b erstrecken sich innerhalb der Wandung des Kupplungszapfens 132 Kanalabschnitte 159a, 159b prallel zur Längsmittelachse des Kupplungszapfens 132 nach außen. An die axialen Kanalabschnitte 159a, 159b schließen sich im Flansch 135 radial nach außen verlaufende Kanalabschnitte 161a, 161b an, von denen nur einer sichtbar ist, und von denen achsparallele Kanalabschnitte 162a, 162b ausgehen, die sich nach außen erstrecken und an der Vorderseite des Flansches 135 austreten. Die vorbeschriebene Kanalabschnitte sind durch Bohrungen gebildet, wobei die Kanalabschnitte 159a, 159b von einer Innenschulter des Durchgangslochs 136 des Kupplungszapfens 132 und die Kanalabschnitte 161a, 161b von der Umfangsfläche des Flansches 135 her eingebohrt und endseitig durch Stopfen verschlossen sind. Die Kanalabschnitte 162a, 162b sind im Querschnitt größer bemessen und es sind darin Schlauchanschlußelemente, hier Anschlußhülsen 163 fest eingesetzt, die sich in einem Abstand von ein paar Milimeter neben dem zugehörigen Armglied 108f befinden. Auf die beiden vorhandenen Anschlußhülsen 163 sind zwei flexible Medienschläuche 160 aufgesteckt, die sich entlang des Gelenkgliederarms 108 zu dessen vorderen Ende hin erstrecken zwecks Versorgung des Laser-Behandlungsinstruments 122 und am Gelenkgliederarm 108 gehalten sind z.B. durch Badagen. Das Laser-Handstück ist durch eine mit der vorbeschriebenen Steck/Dreh-Kupplung vergleichbare Steck/Dreh-Kupplung 164 lösbar mit dem vordersten Armglied 108f verbunden ist. An dieser Kupplungsstelle ist vorzugsweise ein nach vorne ragender Kupplungszapfen vorgesehen, der in eine Kupplungsbuchse des Laser-Handstücks einsteckbar ist und mit seinem hinteren Ende mit dem vordersten Armglied 108f verschraubt ist. Dieser im einzelnen nicht dargestellte Kupplungszapfen ist spiegelbildich zum Kupplungszapfen 132 angeordnet und ausgebildet, so daß auch die Verschraubung und die Durchführung der Medienleitungen 148 durch den vorhandenen Flansch und die Kupplung entsprechend der Ausgestaltung bei der Steckkupplung 131 ausgeführt sein können, wobei die Medien im Laser-Handstück zu dem Behandlungswerkzeug zugeordneten Austrittsöffnungen geführt sind.

Zur Abdichtung der Medien bei ihrem Durchtritt durch den zylindrischen Kupplungsspalt können zu beiden Seiten der Ringnuten 154a, 154b oder der radialen Kanalabschnitte 157a, 157b Ringnuten 165 in der Kupplungsbuchse 137 oder im Kupplungszapfen 132 angeordnet sein, in die Dichtungsringe, vorzugsweise O-Ringe 166 eingesetzt sind.

Ein soweit beschriebener Gelenkgliederarm 108 ist aufgrund seines Eigengewichts mit einem nach unten gerichteten Drehmoment behaftet, dem der Behandler bei der Behandlung beim manuellen Halten des Laser-Behandlungsinstruments 122 entgegenzuwirken hat. Um dies zu erleichtern ist dem Gelenkgliederarm 108 eine Ausgleichsvorrichtung 171 zugeordnet, die sein Eigengewicht in seiner auf dem Tragteil 112 abgelegten Ausgangsstellung oder in einer mittleren Stellung seines Bewegungsbereichs zumindest teilweise ausgleicht, d.h. dem Eigengewicht entgegenwirkt, so daß der Gelenkgliederarm 108 wenigstens teilweise gewichtsentlastet ist.

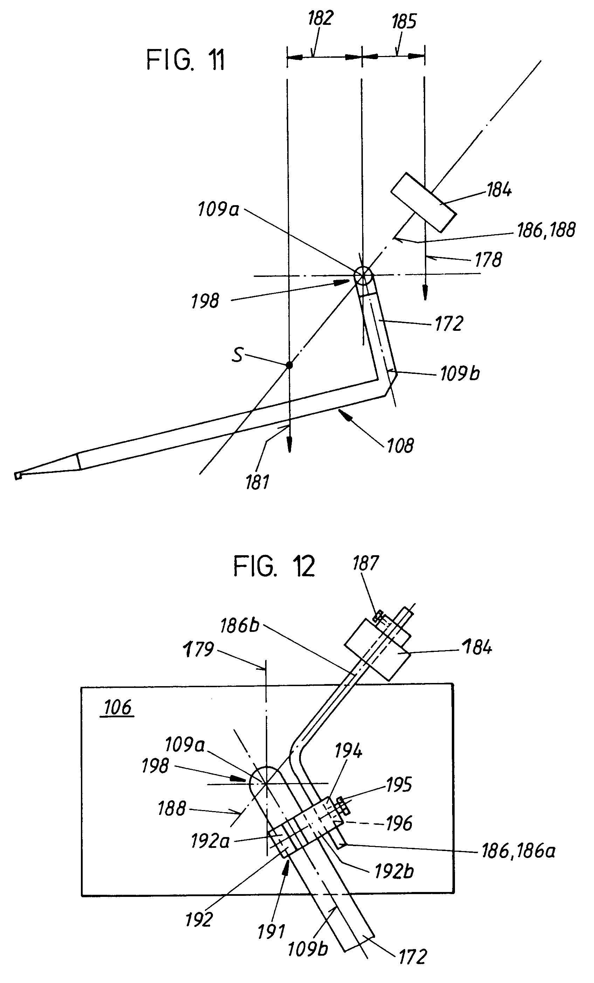

Vorzugsweise ist der Gelenkgliederarm 108 so angeordnet, daß sein hinterstes Armglied 108a bzw. dessen bezüglich der Drehachse 109a radial wegweisender Schenkel 172 sich in seiner Ausgangsstellung schräg nach vorne (Fig. 7) oder schräg nach hinten (Fig. 11 und 12) und dabei vorzugsweise nach unten erstreckt. Die Ausgleichsvorrichtung 171 ist so ausgebildet und angeordnet, daß sie ein dem Eigengewicht entgegenwirkendes Drehmoment am hinteresten Armglied 108a erzeugt.

Gemäß Figuren 7, 9 und 10 ist eine Ausgleichsvorrichtung 171a, 171b vorgesehen, die durch eine Feder die angestrebte Ausgleichskraft erzeugt. Die Feder greift in einem radialen Abstand von der Drehachse 109a am hinteresten Armglied 108a an, vorzugsweise an der Kupplungsbuchse 137. Gemäß Figur 7 ist eine am Gehäuse 121 abgestützte Zugfeder 173 vorgesehen, die unmittelbar oder mittels eines Zugseils 174 an der Kupplungsbuchse 137 angreift. Um dabei einen gewissen Drehwinkelbereich für das hinterste Armglied 108a zu gewährleisten, ist das Zugseil 174 über diesen bestimmten Drehwinkelbereich am Umfang der Kupplungsbuchse 137 aufgewickelt, vorzugsweise auf der Umfangsfläche 175 eines Flansches 176, der bei der vorliegenden Ausgestaltung das Drehlagerteil bildet. Das Zugseil 174 ist an seinem Zugende z.B. mittels einer Schraube 174a an der Kupplungsachse 137 befestigt. Durch einen an der Kupplungsbuchse 137 befestigten Anschlag oder Stift 174b, der mit einem gehäusefesten Anschlag 174c zusammenwirkt, kann die durch die Ausgleichsfeder 173 erzeugte maximale Drehbewegung begrenzt werden.

Um den vorhandenen Raum besser ausnutzen zu können, ist bei der Ausgestaltung gem. Figur 7 die Zugfeder 173 in der horizontalen Längsrichtung des sich parallel zur Vorderseite länglich erstreckenden Gehäuses 121 darin vorzugsweise in dessen hinteren Bereich angeordnet, wobei das Zugseil 174 um eine drehbar am Gehäuse 121 gelagerte Umlenkrolle 177 umgelenkt ist.

Zwischen der Kupplungsbuchse 137 und dem Steckzapfen 132 ist eine Drehmitnahmeverbindung 170 vorgesehen, mittels der das von der Feder 173 erzeugte Ausgleichsmoment auf den Gelenkgliederarm 108 übertragen werden kann. Gemäß Figur 8 wird die Drehmitnahmeverbindung 170 durch mehrere, auf einem koaxialen Teilkreis angeordnete Drehmitnahmestifte 170a gebildet, die in Drehmitnahmelöcher 170b einfassen und somit ebenfalls eine Steckkupplung bilden, die beim Ein- und Ausstecken des Steckbolzens 132 selbsttätig geschlossen und geöffnet wird. Vorzugsweise sind die Drehmitnahmestifte 170a in achsparallelen Löchern des Flansches 135 fest eingesetzt und sie ragen davon nach hinten achsparallel vor, um in die zugehörigen Drehmitnahmelöcher 170b in der Kupplungsbuchse 137 einfassen zu können. Für eine Drehmitnahmeverbindung 170 reicht ein Drehmitnahmestift 170a aus. Vorzugsweise sind mehrere, z.B. vier oder sechs Drehmitnahmestifte 170a und zugehörige Drehmitnahmelöcher 170b in gleichen Winkelabständen voneinander angeordnet. Hierdurch werden mehrere Kupplungsstellungen geschaffen, die in Umfangsrichtung versetzt zueinander angeordnet sind. Hierdurch wird eine Einstellvorrichtung für die Größe der Federkraft bzw. des Ausgleichsmoments geschaffen, weil das hinterste Armglied 108a in unterschiedlichen Drehstellungen an die Kupplungsbuchse 137 angekuppelt werden kann und somit die Vorspannung der Ausgleichsfeder und/oder die Ausgangsdrehstellung des hintersten Armglieds 108a variiert und wahlweise eingestellt werden kann.

Es ist vorteilhaft, die mit dem Pfeil 178 verdeutlichte Ausgleichskraft in Abhängigkeit von der Drehung des hintersten Armglieds 108a so zu verändern, daß sie mit zunehmendem Winkelabstand des Schenkels 172 von der vertikalen Mittelebene 179 zunimmt. Hierdurch können Veränderungen des Eigengewichtdrehmoments 181 berücksichtigt werden, die sich aufgrund unterschiedlicher Schrägstellungen des Schenkels 172 und unterschiedlichen Wirkabständen 182 eines Schwerpunktes des Gelenkgliederarms 108 zumindest des hintersten Armglieds 108a wirksam sind. Dies kann dadurch erreicht werden, daß die Umfangsfläche 175 einen solchen exzentrischen oder kurvenförmigen Verlauf aufweist, der den jeweils wirksamen Eigengewichts-Drehmomenten 181 bei unterschiedlichen Schrägstellungen des Schenkels 172 und unterschiedlichen Hanhabungsstellungen der übrigen Armglieder entspricht (Figur 4).

Da der Behandler das Laser-Behandlungsinstrument 122 in der Hand hält und deshalb einen Teil dessen Eigengewichtes trägt, braucht nur dem übrigen, aus dem verbleibenden Teilgewicht resultierenden Drehmoment des Gelenkgliederarms 108 entgegengewirkt zu werden.

Bei der Ausgestaltung gemäß Fig. 10 ist die Ausgleichsfeder eine Torsionsfeder, insbesondere eine Schrauben- oder Wendelfeder 173a, die koaxial zur Drehachse 109a angeordnet ist und mit ihrem der Kupplungsbuchse zugewandten Ende drehfest mit der Kupplungsbuchse 137 und an ihrem ihr abgewandten Ende drehfest mit einem gehäusefesten Stützteil 183 verbunden ist. Hierzu können achsparallel abgewinkelte Enden der Wendelfeder dienen, die in achsparallelen Löchern der Kupplungsbuchse 137 und des Stützteils 183 einfassen. Der freie Innenquerschnitt der Wendelfeder 173a ist so groß bemessen, daß der freie Durchgang des Laserstrahls 124 nicht behindert wird. Bei den Ausgestaltungen gemäß Figuren 7 und 10 ist die Ausgleichsvorrichtung 171 somit in das Steuergerät 106 bzw. dessen Gehäuse 121 integriert.

Die Ausgleichskraft der Ausgleichsvorrichtung 171 kann auch durch ein Ausgleichsgewicht erzeugt werden. Eine solche Ausgestaltung ist gemäß Figuren 11 und 12 vorgesehen, bei denen die Ausgleichsvorrichtung 171 außerhalb des Steuergeräts 106 angeordnet ist. Hierbei ist ein Ausgleichsgewicht 184 vorgesehen, das lösbar oder unlösbar am hinteren Armglied 108a oder vorzugsweise 108b angeordnet ist. Der Wirkabstand 185 des Ausgleichgewichts 184 ist wahlweise einstellbar. Hierzu kann eine insbesondere radiale Tragstange 186 dienen, auf der das Ausgleichsgewicht 184 mit einem Loch aufgesteckt und zum Beispiel durch eine Klemmschraube 187 feststellbar ist.

Figuren 12 zeigt einen Halter 191 für das Ausgleichsgewicht 184, der zum einen eine Einstellbarkeit des Ausgleichsgewichts 184 und zum anderen eine lösbare Befestigung am Schenkel 172 ermöglicht. Dieser Halter 191 besteht aus einer Befestigungsschelle 192, deren Schellenhälften 192a, 192b durch sie in Löchern durchfassende Befestigungsschrauben in einer den Schenkel 172 umgreifenden Position festklemmbar sind. Eine Befestigungsschelle weist ein vertikales Loch 194, vorzugsweise in Form einer Bohrung, auf, in die eine stumpfwinklig abgebogene Tragstange 186 mit ihrem vertikalen Stangenabschnitt 186a einsteckbar und in ihrer wahlweise eingesteckten Höhenposition durch eine Klemmschraube 195 festklemmbar ist, die von außen in eine in das Loch 194 mündende Gewindebohrung 196 einschraubbar ist. Der sich in der Einbauposition schräg nach oben erstreckende Tragstangenabschnitt 186b dient der Halterung des Ausgleichgewichts 184. Bei dieser Ausgestaltung ist das Ausgleichsgewicht 184 durch seine Verstellung auf der Tragstange 186a, durch eine Verstellung der Befestigungsschelle 192 längs des Schenkels 172 und durch Drehen der Tragstange 186 im Loch 194 einstellbar.

Bei dieser Ausgestaltung ist das Ausgleichsgewicht 184 so angeordnet, daß es beim Aus- und Einschwenken des sich in etwa horizontaler Gebrauchsstellung befindlichen Armglieds 108c mitgedreht wird, weil das Armglied 108b um seine Längsachse 109b ebenfalls mitgedreht wird. In der horizontal ausgeschwenkten Stellung des Armglieds 108c befindet sich das Ausgleichsgewicht in seiner hinteren Position, in der es ein großes Ausgleichs-Drehmoment ausübt und dem vergrößerten Drehmoment des Gelenkgliederarms 108 entgegenwirkt. Wenn das Armglied 108c zum Steuergerät 106 hin eingeschwenkt wird, wird das Ausgleichsgewicht 184 zur Seite hin verschwenkt, wobei sich sein Wirkabstand 185 verringert. Hierdurch wird die Wirksamkeit des Ausgleichgewichts 184 selbsttätig in Abhängigkeit der Stellung des Armglieds 108c und des sich aufgrund dieser Verstellung verändernden Drehmoments des Gelenkgliederarms 108 angepaßt. In der auf dem Tragteil 112 abgelegten Position des Armglieds 108c ist das Drehmoment des Gelenkgliederarms 108 gering, und es ist auch das Drehmoment des Ausgleichgewichts 184 gering, weil es seitlich und zur Drehachse 109a hin verschwenkt ist. Die Anordnung ist weiter so getroffen, daß in der Gebrauchsstellung des Gelenkgliederarms 108 oder in der Mittelstellung des zugehörigen Verstellbereichs des Gelenkgliederarms 108 die Längsmittelachse 188 der Tragstange 186 den Schwerpunkt S des Gelenkgliederarms 108 schneidet. Bezüglich der vertikalen Mittelebene 179 befindet sich das Ausgleichsgewicht 184 auf der Seite, zu der hin der Schenkel 172 sich schräg erstreckt. Wenn letzterer sich schräg nach unten und vorzugsweise nach hinten erstreckt, erstreckt sich die Tragstange 186 schräg aufwärts nach hinten.

Beim Ausführungsbeispiel nach Figuren 11 und 12 kann eine Mitnahmevorrichtung 170 zwischen der Kupplungsbuchse 137 und dem Steck- bzw. Kupplungszapfen 132 fehlen und die Kupplungsbuchse 137 starr befestigt sein. Dagegen ist es vorteilhaft, das hinterste Armglied 108a mit zwei koaxial hintereinanderliegenden Gelenkteilen auszubilden, die relativ zueinander um die Drehachse 109a drehbar sind. Hierdurch wird der Kupplungszapfen 132 von Drehbewegungen beim Schwenken des Gelenkgliederarms 108 um die Achse 109a freigestellt (Verschleißschutz). Ein solches Gelenk 198 kann in die lösbare Verbindung zwischen dem Kupplungszapfen 132 und dem ihn tragenden Armglied 108a integriert sein.

Das Tragteil 112 ist vorzugsweise mit einer horizontalen Ablagefläche 112a ausgebildet, auf der der freie Endbereich des Gelenkgliederarms 108 so positionierbar ist, daß auch das Behandlungsinstrument 122 auf der Ablagefläche 102a liegen kann und somit in horizontaler Anordnung ruhen kann. Das Tragteil 112 ist deshalb vorzugsweise plattenförmig ausgebildet. Es ist im weiteren vorteilhaft, dem Tragteil 112 einen Schalter zuzuordnen, der dafür sorgt, daß nur dann, wenn der Gelenkgliederarm 108 vom Tragteil 112 abehoben ist, das Gerät bereit ist, den Laserstrahl 124 zum Behandlungsinstrument 122 abzugeben. Bei einem solchen Mikroschalter kann es sich um einen Druckschalter oder einen Bewegungsschalter handeln. Vorzugsweise ist das Tragteil 112 geringfügig vertikal beweglich, bzw. schwenkbar gelagert, so daß ein Bewegungsschalter eine selbstätige, z.B. federnde Aufwärtsbewegung des Tragteils 112 beim Abnehmen des Gelenkgliederarms 108 ermitteln kann.

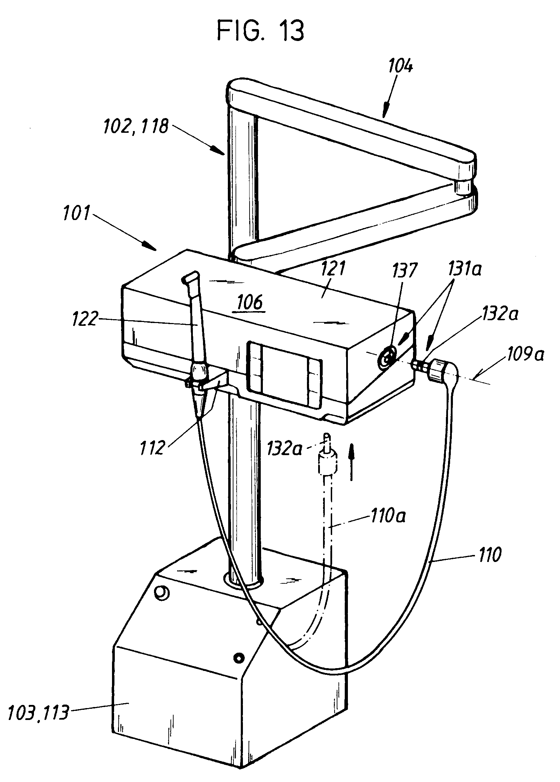

Ihm Rahmen der Erfindung ist es möglich, anstelle eines Gelenkgliederarms 108 eine andere Zuführungs- bzw. Versorgungseinrichtung für Medien vorzusehen. Hierbei handelt es sich um flexible Lichtleiterkabel 110. Ein solches Lichtleiterkabel ist in Figur 13 dem Laser-Behandlungsgerät 101 zugeordnet, wobei es an beiden Enden Kupplungselement aufweist, mit denen es handhabungsfreundlich und schnell zum einen an das Steuergerät 106 und zum anderen an das Laser-Behandlungsinstrument 122 ansteckbar ist. Diese beiden endseitigen Kupplungselemente sind vorzugsweise einander gleich ausgebildet, so daß jedes Ende des flexiblen Lichtleiterkabels sowohl an das Steuergerät 106 als auch an das Laser-Behandlungsinstrument 122 ansteckbar ist. Die vorhanden Steck/Dreh-Kupplungen können den vorbeschriebenen Ausgestaltungen entsprechen. Eine Ausgleichsvorrichtung ist nicht vorhanden ist. Die vorhandenen weiteren Medienleitungen können dabei innerhalb des Lichtleiterkabels 110 oder an dessen Außenumfang verlaufen. Bei einer seitlichen Anordnung der geräteseitigen Steck/Dreh-Kupplung 131a gemäß Figur 13 kann sich das Lichtleiterkabel 110 an den Kupplungszapfen 132a axial fortsetzen oder es kann durch einen Winkelabschnitt abgewinkelt sein, wie es in Figur 13 dargestellt ist.

Eine seitliche Anordnung der geräteseitigen Steck/Dreh-Kupplung 131a hat - wie bereits bei den vorbeschriebenen Ausgestaltungsbeispielen - den Vorteil, daß bei den bei der Behandlung erforderlichen Bewegungen des Lichtleiterkabels 110 der kabelseitige Kupplungszapfen 132a sich um seine Längsachse 109a drehen kann und somit weniger auf Biegung beansprucht wird. Es ist im Rahmen der Erfindung jedoch auch möglich, die Steck/Dreh-Kupplung an der Unterseite des Steuergeräts 6 anzuordnen, vorzugsweise im seitlichen und/oder vorderen Endbereich des vorhandenen Gehäuses. Bei einer solchen Anordnung erstreckt sich das Lichtleiterkabel 110a zunächst nach unten und dann bogenförmig nach oben, wobei ein Winkelabschnitt für das Lichtleiterkabel 110a nicht erforderlich ist. Eine solche Ausgestaltung ist in Figur 13 andeutungsweise dargestellt.

Bei den vorbeschriebenen Lichtleiterkabeln kann es sich um verschiedene Ausgestaltungen handeln. Es gibt Lichtleiterkabel, die einen mit einer Flüssigkeit gefüllten Lichtleitkanal aufweisen. Es kann sich auch um ein Lichtleiterkabel mit einem Lichtleiterkanal handeln, dessen Innenmantelfläche verspiegelt ist. Es ist auch möglich, ein flexibles Glasfaserkabel zu verwenden.

Vorzugsweise sind bei allen vorbeschriebenen Versorgungseinrichtungen die endseitigen Kupplungselemente zumindest an einem Ende, vorzugsweise an beiden Enden gleich, so daß ein Gelenkgliederarm und vorbeschriebene flexible, Laserlicht leitende Kabel untereinander ausgetauscht werden können. Mit dem Gelenkgliederarm ist ein großer Wirkungsgrad der Laserlichtübertragung gewährleistet. Bei einem Glasfaserkabel, einem eine Laserlichtleitende Flüssigkeit aufweisenden Kabel oder einem innenverspiegelten Kabel ist der Wirkungsgrad zwar geringer, jedoch ist eine leichte Handhabung möglich. Außerdem haben alle vorgenannten Versorgungseinrichtungen verschiedene andere Nachteile. Eine Laserlicht leitende Flüssigkeit neigt z. B. dazu, nach einer gewissen Zeit trübe zu werden.

Deshalb ist bei allen vorbeschriebenen Versorgungseinrichtungen nach gewissen Zeitabständen mit Wartungsarbeiten oder einem Austausch zu rechnen. Dies wird durch das Vorhandensein von vorbeschriebenen Schnellkupplungen vereinfacht und erleichtert.

Insbesondere die einander gleiche Ausbildung der Schnellkupplungen führt zu einer preiswerteren Herstellung und außerdem wird der Aufwand für eine Lagerhaltung verringert.

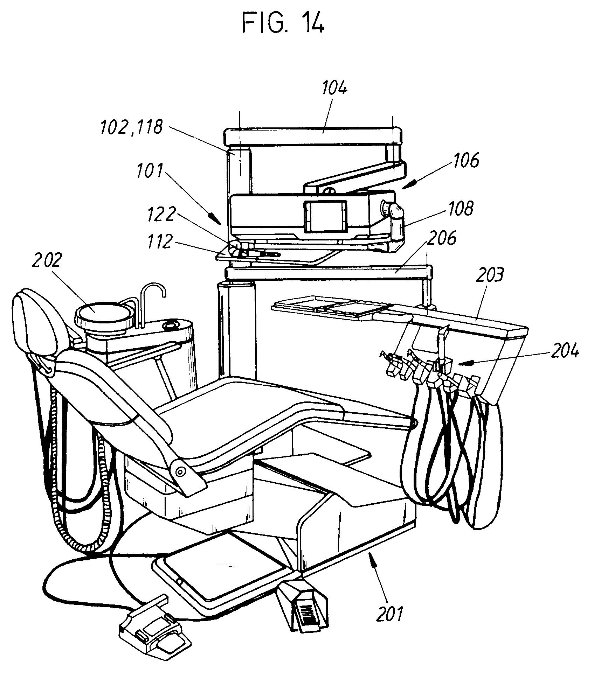

Gemäß Figur 14 ist das Laser-Behandlungsgerät 101 einem zahnärztlichen Behandlungsstuhl 201 mit einer üblichen Spülbeckenanordnung 202 und einem horizontal verstellbaren Halter 203 für übliche energieversorgte Behandlungsinstrumente 204 zugeordnet. Der Halter 203, der vorzugsweise plattenförmig mit einer darauf befindlichen Ablagefläche für nicht energieversorgte Behandlungsinstrumente versehen ist, ist an einem horizontalen Tragarm 206 vorzugsweise horizontal schwenkbar gelagert, der unterhalb des Tragarms 104 für das Steuergerät 106 an der Tragsäule 118 ebenfalls horizontal schwenkbar gelagert ist. Vorzugsweise ist der Tragarm 106 am oberen Tragsäulenteil 118b gelagert und somit ebenfalls vertikal verstellbar.

## Patentansprüche

1. Laser-Behandlungsgerät (101), insbesondere für ärztliche oder zahnärztliche Zwecke, mit einem Steuergerät (106) und einer mit dem Steuergerät durch eine lösbare Verbindung (31) verbundenen Versorgungseinrichtung (108) für ein Laser-Behandlungsinstrument (2;122) mit einem vorzugsweise seitlichen Austritt an seinem vorderen Ende für einen Laserstrahl (124), wobei wenigstens zwei vom Steuergerät (106) ausgehende, sich durch die lösbare Verbindung (131) und entlang der Versorgungseinrichtung (108) zum Laser-Behandlungsinstrument (2;122) erstreckende Mediumleitungen vorgesehen sind, von denen eine für die Zuführung eines Laserstrahls (124) und die andere für ein weiteres Medium, insbesondere Luft und/oder Wasser, bestimmt ist, und wobei das Laser-Behandlungsinstrument (2;122) ebenfalls durch eine lösbare Verbindung (6;164) mit der Versorgungseinrichtung (108) verbindbar ist,
**dadurch gekennzeichnet,**
daß die lösbare Verbindung (6;131,164) zwischen dem Steuergerät (106) und der Versorgungseinrichtung (5;108) und/oder zwischen der Versorgungseinrichtung (5;108) und dem Laser-Behandlungsinstrument (2;122) durch eine selbsttätig elastisch ein- und ausrastende Steckkupplung (6;131,164) mit einem zylindrischen Kupplungszapfen (18;132) und einer ihn aufnehmenden zylindrischen Kupplungsbuchse (17;137) gebildet ist, wobei die Mediumleitung für den Laserstrahl (124) sich koaxial durch die Steckkupplung (6;131,164) erstreckt und die weitere Mediumleitung (7;48) die zylindrische Trennfuge zwischen dem Kupplungszapfen und der Kupplungsbuchse abgedichtet durchsetzt, und sich im Kupplungszapfen und in der Kupplungsbuchse fortsetzt und wobei nächst der Mündungsöffnung an der Trennfuge eine Ringnut (58a,58b;154a,154b) in der Innenwandung (16;156) der Kupplungsbuchse (17;137) oder vorzugsweise in der Außenwandung (22;142) des Kupplungszapfens (18;132) vorgesehen ist, so daß die Versorgungseinrichtung (108) gegenüber dem Steuergerät (106) und/oder das Laser-Behandlungsinstrument (2;122) gegenüber der Versorgungseinrichtung (108) ohne Unterbrechung der Mediumleitung (7;148) um 360^{o} und mehr drehbar ist.

2. Laser-Behandlungsgerät nach Anspruch 1,
**dadurch gekennzeichnet,**
daß am vorderen und/oder am hinteren Ende der Versorgungseinrichtung (108) der Kupplungszapfen (18;132) vorgesehen ist und die zugehörige Kupplungsbuchse (17;137) dem Steuergerät (106) bzw. dem Laser-Behandlungsinstrument (2;122) zugeordnet ist.

3. Laser-Behandlungsgerät nach Anspruch 1 oder 2,
**dadurch gekennzeichnet,**
daß der Steckkupplung (6;131) ein vorzugsweise durch einen Federring (19;139) gebildetes Einrastmittel zugeordnet ist, das in einer in der Innenwandung der Kupplungsbuchse oder vorzugsweise in der Außenwandung (22;142) des Kupplungszapfens (18;132) angeordnete Ausnehmung (Ringnut 21;141) elastisch ausfedernd sitzt und in der Kupplungsstellung in einer gegenüberliegenden Ausnehmung (Ringnut 23;144) in der jeweils gegenüberliegenden Wandung der Kupplungsbuchse (17;137) oder des Kupplungszapfens (18;132) einrastet.

4. Laser-Behandlungsgerät nach wenigstens einem der vorhergehenden Ansprüche,
**dadurch gekennzeichnet,**
daß das der Versorgungseinrichtung (108) zugeordnete Kupplungsteil ein mit der Versorgungseinrichtung (108) lösbar verbindbares Anschlußstück (4;135) ist, das ein Anschlußelement für die Mediumleitung (7;148) aufweist, das sich an der Außenmantelfläche oder an der der Versorgungseinrichtung (108) zugewandten Endfläche, insbesondere im Bereich eines Flansches, befindet.

5. Laser-Behandlungsgerät nach wenigstens einem der vorhergehenden Ansprüche,
**dadurch gekennzeichnet,**
daß zwei Mediumleitungen vorgesehen sind, eine für Luft und eine für Wasser.

6. Laser-Behandlungsgerät, insbesondere nach wenigstens einem der vorhergehenden Ansprüche,
**dadurch gekennzeichnet,**
daß einer oder beiden Mediumleitungen, vorzugsweise der Wassermediumleitung, ein Drosselventil (74) zugeordnet ist, das vorzugsweise im Anschlußstück (4) angeordnet ist.

7. Laser-Behandlungsgerät nach Anspruch 6,
**dadurch gekennzeichnet,**
daß das Drosselventil (74) in einem radialen oder axialen, die zugehörige Medienleitung anschneidenden Kanal angeordnet und das vorzugsweise schraubbare Ventilglied (74a) vorzugsweise von der Vorderseite zugänglich ist.

8. Laser-Behandlungsgerät nach wenigstens einem der vorhergehenden Ansprüche,
**dadurch gekennzeichnet,**
daß im Anschlußstück (4), das vorzugsweise durch eine Verschraubung mit der insbesondere durch einen Gliedergelenkarm (5,38) gebildeten Versorgungseinrichtung verbindbar ist, eine Linse (31) für den Laserstrahl angeordnet ist, die vorzugsweise von der dem Kupplungszapfen (18) abgewandten, insbesondere hinteren Seite her in eine Ausnehmung (29) einsetzbar und fixierbar ist.

9. Laser-Behandlungsgerät nach wenigstens einem der vorhergehenden Ansprüche,
**dadurch gekennzeichnet,**
daß an einem oder an beiden Enden der Versorgungseinrichtung (108) die vorzugsweise durch Kupplungszapfen (131,131a) gebildeten Kupplungselemente einander gleich sind.

10. Laser-Behandlungsgerät nach Anspruch 9,
**dadurch gekennzeichnet,**
daß ihm wenigstens zwei unterschiedliche Versorgungseinrichtungen (108) zugeordnet sind, von denen eine durch einen Gelenkgliederarm (108) und eine andere durch ein flexibles, Laserlicht leitendes Kabel (110,110a) gebildet ist und hierzu einen Kanal mit einer Laserlicht leitenden Flüssigkeit aufweist oder einen Laserlicht leitenden Kanal aufweist, dessen Innenmantelfläche verspiegelt ist, oder wenigstens eine Glasfaserleitung aufweist.

11. Laser-Behandlungsgerät nach wenigstens einem der vorhergehenden Ansprüche,
**dadurch gekennzeichnet,**
daß die dem Steuergerät (106) zugeordnete Steck/Dreh-Kupplung (131) mit horizontaler Steck- bzw. Kupplungsachse (9a) angeordnet und vorzugsweise seitlich am Steuergerät (106) vorgesehen ist.

12. Laser-Behandlungsgerät nach wenigstens einem der Ansprüche 1 bis 10,
**dadurch gekennzeichnet,**
daß die dem Steuergerät (106) zugeordnete Steck/Dreh-Kupplung mit einer im wesentlichen vertikalen Steck- bzw. Kupplungsachse angeordnet ist und vorzugsweise an der Unterseite des Steuergerätes (106) vorgesehen ist.
